## Europäisches Patentamt
## European Patent Office
## Office européen des brevets

(19)

(11) Numéro de publication: **0 071 856**
A1

(12)

# DEMANDE DE BREVET EUROPEEN

(21) Numéro de dépôt: **82106717.0**

(22) Date de dépôt: **26.07.82**

(51) Int. Cl.³: **B 23 P 19/00**
// B60B31/00

(30) Priorité: **03.08.81 FR 8115318**

(43) Date de publication de la demande: **16.02.83**
**Bulletin 83/7**

(84) Etats contractants désignés: **AT BE CH DE FR GB IT LI LU NL SE**

(71) Demandeur: **CENTRE DE PRODUCTION MECANIQUE-FRANCE, Lieu-Dit Saint Paul, F-74330 Epagny (FR)**

(72) Inventeur: **Carminati, Julien, 24, rue de Verdun, F-74000 Annecy-le-Vieux (FR)**

(74) Mandataire: **Modiano, Guido et al, MODIANO, JOSIF, PISANTY & STAUB Modiano & Associati Via Meravigli, 16, I-20123 Milan (IT)**

(54) Distributeur de rayons de roues à rayons pour machine à rayonner.

(57)  Le distributeur comprend un réservoir (1), un couteau (6) animé d'un mouvement de translation alternatif vertical, une rampe inclinée (9) amenant les rayons en butée contre un tambour (10) muni de rainures périphériques (11). La rotation du tambour (10) amène les rayons un à un dans un dispositif de guidage (22) comprenant deux surfaces inclinées (24, 25), la surface supérieure (24) étant glissante, et la surface inférieure (25) étant en matière adhérente.

Application à la réalisation de distributeurs pour l'insertion automatique de rayons dans une machine pour insérer des rayons dans les trous de moyeux de roues à rayons.

ACTORUM AG

DISTRIBUTEUR DE RAYONS DE ROUES A RAYONS POUR MACHINE A RAYONNER.

La présente invention concerne un dispositif pour amener de façon automatique les rayons un à un à partir d'un réservoir jusqu'à une machine permettant d'introduire les rayons dans les trous d'un moyeu de roue à rayons.

L'enfilage des rayons dans les moyeux de roues à rayons est une opération minutieuse et délicate qui jusqu'alors a été effectuée de façon manuelle. Des machines sont en cours de développement pour permettre d'effectuer cet enfilage de façon automatique. Il est alors nécessaire d'alimenter ces dispositifs en rayons, ces rayons étant disposés dans une position déterminée. En effet, les rayons comprennent généralement une tige rectiligne cylindrique, dont une extrémité est recourbée et comporte une tête de diamètre plus important. Pour effectier un enfilage correct, certains dispositifs nécessitent que la tête soit positionnée selon une direction déterminée, d'une part pour permettre le passage du rayon dans la machine à rayonner, et d'autre part pour assurer un bon positionnement du rayon sur le moyeu de roue à rayons.

On a déjà réalisé des distributeurs pour pièces diverses. Ainsi le brevet US 3 080 092 décrit un distributeur pour vis comportant un sélecteur à couteau, suivi d'une rampe en glissière à section spéciale, les vis passant sous un rouleau muni de gorges périphériques circulaires dans lesquelles s'engagent les vis lorsqu'elles sont en bonne position. Dans ce dispositif le rouleau fait seulement office de butée, et ne peut convenir pour la sélection de rayons.

Le brevet US 2 823 830 décrit des moyens pour amener en bonne position des vis par un convoyeur rotatif disposé entre deux canalisations. Ce dispositif n'assure pas une véritable sélection et est inapplicable à la forme des rayons.

Un objet de la présente invention est de proposer un distributeur de rayons permettant de présenter de façon automatique les rayons un à un et de les amener dans une position prédéterminée dans la machine à rayonner. Dans un premier mode de réalisation décrit, la machine à rayonner comprend une goulotte sensiblement horizontale et dans laquelle doit être insérée la tige de rayon, la tête de rayon étant disposée en dessus de la goulotte. Ainsi, le dispositif doit amener les rayons dans une position sensiblement horizontale, par translation de haut en bas, la tête de rayon étant dirigée vers le haut.

Dans un second mode de réalisation, la goulotte est plus large et il suffit que le rayon soit dans le bon sens, quelque soit l'inclinaison de la tête.

Un autre objet de la présente invention est de proposer un distributeur permettant d'éviter la présentation de deux rayons à la fois, bien que la forme des rayons avec une tête recourbée ait tendance à provoquer leur crochage et leur entraînement simultané.

Un autre objet de l'invention est de proposer un distributeur évitant particulièrement le coincement des rayons et le blocage du dispositif.

Selon un autre objet de l'invention, les rayons sont présentés en un temps très court, de façon à limiter les temps morts et augmenter la cadence de la machine à rayonner.

Pour ce faire, et selon une caractéristique de l'invention, le distributeur comprend un réservoir à rayons dans lequel les rayons sont disposés en position horizontale, un dispositif à couteaux permettant de sélectionner les rayons et les amener un à un depuis le réservoir jusqu'à une rampe de guidage descendante ; un tambour est entraîné en rotation selon un axe transversal ; il est muni de rainures périphériques parallèles à son axe et de section supérieure à la section des tiges de rayon. Le tambour est disposé en aval de la rampe de guidage pour recevoir les rayons dans ses rainures, et est associé à des butées fixes telles qu'un racleur ; ainsi la rotation du tambour assure simultanément la sélection des rayons, leur stockage intermédiaire en file d'attente disjointe, et leur transport depuis la rampe de guidage jusqu'à une rampe d'évacuation.

Selon une autre caractéristique de l'invention, le dispositif de guidage comprend deux surfaces inclinées sensiblement parallèles, disposées l'une en face de l'autre à une distance prédéterminée pour permettre le glissement d'un rayon entre elles, la première surface ou surface supérieure étant glissante, la seconde surface ou surface inférieure étant en une matière adhérente pour produire sur le rayon un couple de rotation lors de son glissement, la première surface bloquant alors la rotation de la tête pour la maintenir au-dessus de la tige.

Selon une autre caractéristique de l'invention, la première surface a une largeur au moins égale à la longueur du rayon, de sorte que la tête de rayon vienne en appui glissant contre elle, la seconde surface ayant une largeur inférieure pour libérer la tête de rayon ; la distance entre les deux surfaces est supérieure au diamètre de la tige de rayon et inférieure à la demi somme du diamètre de la tige et du diamètre de la tête de rayon. On réalise ainsi un dispositif de guidage assurant le maximum de liberté au rayon, tout en interdisant sa rotation et en maintenant la tête de rayon au-dessus de la tige. Les blocages et coincements des rayons sont ainsi considérablement réduits.

Selon une autre disposition, le dispositif de sélection à couteau comprend deux couteaux consécutifs, un premier couteau à grand débattement, suivi d'un second couteau à débattement plus faible mais de position plus élevée.

Selon une autre caractéristique de l'invention, on dispose un détecteur pour détecter la présence d'un rayon dans la zone supérieure du cylindre et commander l'arrêt du cylindre et du couteau jusqu'à réception d'un ordre d'éjection d'un rayon dans la machine à rayonner. Ainsi, le dispositif sélectionne librement les rayons dans le réservoir jusqu'à ce qu'un rayon soit présenté prêt à être éjecté, le dispositif étant alors maintenu en état d'attente. On réduit ainsi les temps de transit des rayons, sans subir les retards éventuels dûs au fait que l'enchevêtrement des rayons dans le réservoir ne permet pas au couteau de séparer un rayon à chaque mouvement.

D'autres caractéristiques et avantages de la présente invention ressortiront de la description suivante de modes de réalisation particuliers, faite en relation avec les figures jointes parmi lesquelles :

- la figure 1 représente une vue schématique en coupe longitudinale du distributeur selon la présente invention dans un premier mode de réalisation ;

- la figure 2 représente une vue en coupe partielle selon l'axe I-I de la figure 1 ;

- la figure 3 représente une vue en coupe longitudinale d'un distributeur selon un second mode de réalisation ; et

- la figure 4 représente une vue en coupe transversale selon l'axe II-II de la figure 3.

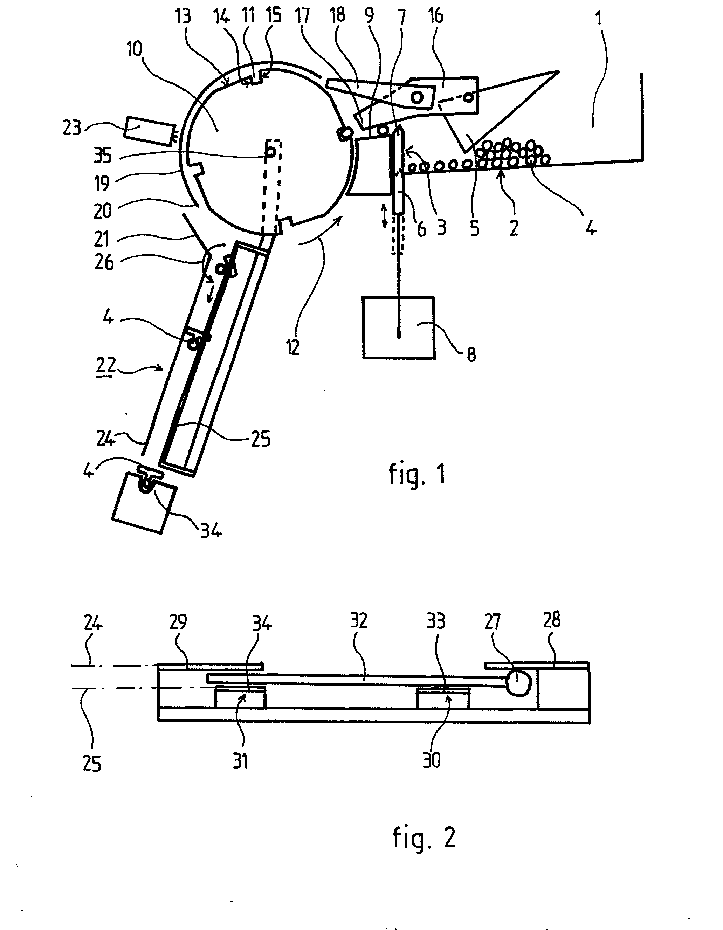

Comme le représentent les figures 1 et 2, le distributeur comprend un réservoir 1 dont le fond 2 est incliné vers son extrémité de sortie 3. Les rayons 4 sont disposés horizontalement dans le réservoir 1, et représentés selon leur section transversale sur la figure 1. Leurs deux extrémités sont guidées par les flancs latéraux du réservoir 1, ces flancs latéraux pouvant être à une distance réglable l'un de l'autre pour s'adapter à des rayons de longueurs différentes. Au voisinage de l'extrémité de sortie 3, une butée fixe 5 provoque la réduction d'épaisseur de la couche de rayons, de façon à diminuer le nombre de rayons se présentant simultanément au voisinage de l'extrémité 3.

Le réservoir 1 est limité à son extrémité de sortie 3 par un couteau 6, comportant une extrémité supérieure horizontale 7 de section amincie, et animé d'un mouvement de translation alternatif vertical, sous l'action de moyens d'entraînement 8. Le couteau 6 est mobile entre une première position, représentée en pointillés sur la figure 1, dans laquelle son extrémité supérieure 7 est en affleurement du fond 2 du réservoir 1, et une seconde position, représentée en traits pleins, dans laquelle l'extrémité supérieure 7 est surélevée et vient en affleurement d'une rampe inclinée 9 sur laquelle le rayon glisse et vient buter contre un tambour rotatif 10 d'axe sensiblement horizontal.

Le tambour 10 comporte des rainures périphériques longitudinales 11 de section supérieure à la section de la tige des rayons. Le tambour 10, entraîné en rotation dans le sens représenté par la flèche 12, entraîne les rayons insérés dans les rainures 11. Pour assurer une bonne insertion des rayons dans les rainures, chaque rainure est précédée d'un méplat 13, de sorte que la lèvre antérieure 14 de la rainure est légèrement moins haute que la lèvre 15 de cette même rainure. On réalise ainsi une structure d'accrochage permettant le rapprochement progressif de la tige de rayon de l'axe de rotation du tambour 10, et son insertion dans la rainure 11. Comme le représente la figure 1, la rampe 9 vient à affleurement du tambour 10 légèrement au-dessus du diamètre horizontal passant par l'axe de rotation du tambour 10.

La présente invention prévoit également des moyens pour éviter l'insertion et l'accrochage de plusieurs rayons sur le tambour dans le cas où plusieurs rayons sont entraînés par le couteau 6. Ainsi, une première butée fixe 16, disposée au-dessus de la rampe 9 et du couteau 6, à une distance légèrement supérieure au diamètre de la tige de rayon, définit un couloir d'introduction évitant le chevauchement des rayons. Le bec 17 de cette butée 16 plaque les rayons et provoque éventuellement leur rotation contre le cylindre et ne laisse passer que les rayons insérés dans une rainure 11. Une seconde butée fixe 18, ou racleur, disposée au-dessus de la première, a une extrémité positionnée en appui sur la surface du tambour 10, pour s'assurer que le rayon entraîné par le tambour est bien inséré sur toute sa longueur dans la rainure 11 et faire tomber un second rayon entraîné le cas échéant avec le premier rayon inséré dans la rainure.

Un capot cylindrique 19 recouvre la partie supérieure du tambour 10, entre la seconde butée 18 et la retombée opposée du tambour, pour maintenir les rayons dans les rainures pendant tout leur parcours. Après l'extrémité 20 du capot, les rayons tombent sur des glissières 21 les amenant sur un dispositif de guidage 22.

Entre l'extrémité 20 du capot et le réservoir 1, le trajet des rayons est relativement grand, d'autant que le couteau 6 ne sépare pas un rayon à chaque mouvement. Pour limiter les temps de transit et augmenter la rapidité du dispositif, on place un détecteur 23 au voisinage de l'extrémité 20 du capot 19, ce détecteur commandant l'arrêt du couteau 6 et du tambour 10 lorsqu'un rayon est présent dans une rainure 11 en regard du détecteur 23. Le mouvement du tambour 10 et du couteau 6 est à nouveau lancé dès qu'un ordre d'expulsion de rayon est donné au dispositif par les organes de commande de la machine à rayonner.

Le dispositif de guidage 22 comprend deux surfaces inclinées et sensiblement parallèles, disposées l'une en face de l'autre pour permettre le glissement d'un rayon entre elles, une première surface 24, ou surface supérieure, comporte une face inférieure glissante et lisse pour permettre le glissement d'un rayon contre elle. Une seconde surface 25, ou surface inférieure, comporte une face supérieure en une matière adhérente, de sorte que cette seconde surface produit sur le rayon un couple de rotation lors de sa chute, comme le représente la flèche 26. La surface supérieure 24 a une largeur supérieure à la longueur du rayon, de sorte que la tête de rayon 27 vienne en appui contre cette surface, tandis que la surface inférieure 25 a une largeur inférieure à la longueur du rayon pour permettre la libre rotation de la tête 27.

Comme le représente en coupe la figure 2, les surfaces 24 et 25 peuvent ne pas être continues, et constituées par exemple de bandes métalliques inclinées disjointes : la surface supérieure 24, dans le mode de réalisation représenté, comprend deux bandes 28 et 29 métalliques, disposées aux deux extrémités du rayon, et la surface inférieure 25 comprend deux bandes 30 et 31, une première bande 30 étant par exemple disposée au quart de la longueur de la tige 32 de rayon en partant de la tête 27, et la seconde bande 31 étant disposée en regard de la bande 29 au voisinage de l'autre extrémité du rayon. Les bandes 30 et 31 sont recouvertes de couches 33 et 34 de matière adhérente telle que du caoutchouc. La distance entre les plans formés par les surfaces supérieure 24 et inférieure 25 est réglée de façon à permettre la rotation de la tige 32 sur les bandes 30 et 31, le glissement de cette tige sur la bande supérieure 29, et l'appui glissant de la tête 27 contre la bande 28. Pour cela, on choisira de préférence une distance entre ces deux surfaces comprise entre l'épaisseur de la tige 32 et la demi somme des diamètres de la tige 32 et de la tête 27.

Après glissement entre les surfaces 24 et 25, le rayon tombe dans une goulotte 34 faisant partie de la machine à rayonner. Pour assurer un bon positionnement du rayon dans la goulotte, il est préférable de positionner le dispositif de guidage 22 de façon que son extrémité inférieure vienne en affleurement de la goulotte 34. Dans ce cas, il peut être nécessaire de prévoir des moyens pour faire échapper le dispositif de guidage 22 après insertion d'un rayon dans la goulotte 34, ce qui peut être réalisé en prévoyant de monter ce dispositif de guidage 22 sur un support rotatif, tournant par exemple autour de l'axe 35 du tambour 10, et entraîné par des moyens d'entraînement non représentés sur les figures.

Le mode de réalisation qui vient d'être décrit assure une bonne sélection des rayons et leur positionnement tête en haut en sortie de la rampe d'évacuation 22. La forme particulière des rayons rend leur sélection délicate, et le dispositif est bien adapté à cette forme. Toutefois certaines erreurs de sélection ont encore pu être constatées lors des nombreux essais auxquels le demandeur a procédé.

Pour réduire le nombre d'erreurs de sélection, et améliorer la fiabilité du dispositif, on pourra préférer le mode de réalisation suivant, dans lequel les moyens de sélection associés au tambour rotatif ont été modifiés. En outre, ce second mode de réalisation sera décrit en relation avec une rampe d'évacuation 22 modifiée et simplifiée, qui n'assure plus le positionnement systématique de la tête de rayon vers le haut en sortie de la rampe. Cette réalisation simplifiée de la rampe d'évacuation convient à une utilisation dans laquelle il n'est pas nécessaire de fixer la position de cette tête de rayon. On pourra bien entendu associer ce mode de réalisation simplifié de la rampe d'évacuation avec le premier mode de réalisation des moyens de sélection précédemment décrits.

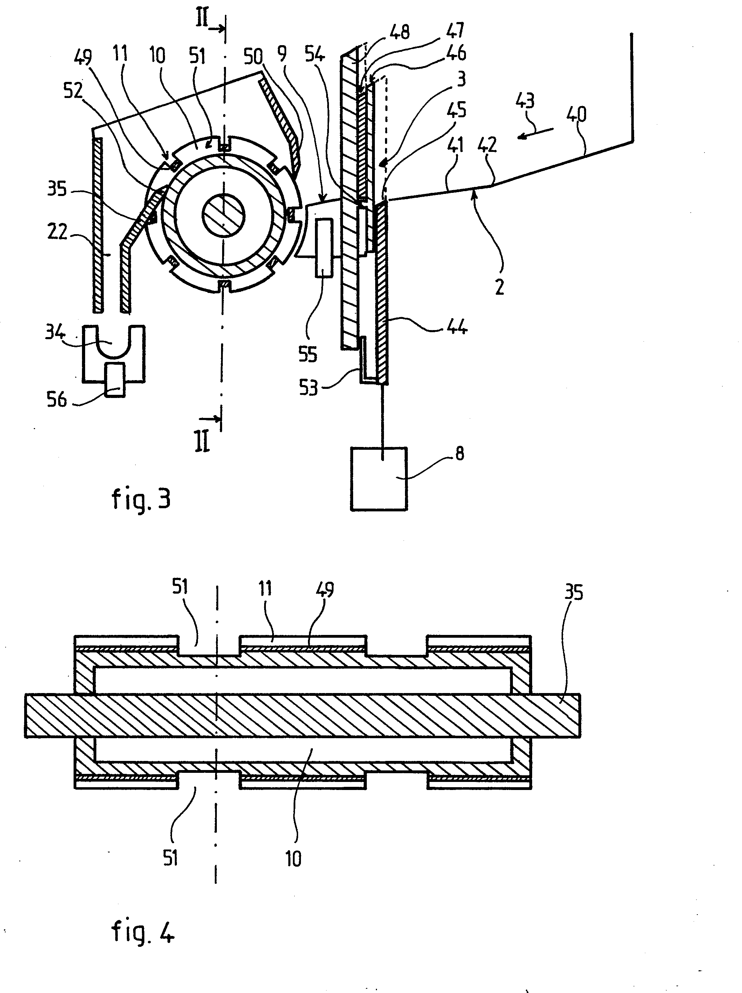

Ce second mode de réalisation est illustré par les figures 3 et 4. Le fond 2 du réservoir 1 comprend deux parties planes successives 40 et 41 formant un dièdre rentrant, comme le représente la figure 3, raccordées selon une ligne 42 transversale par rapport à la direction 43 de progression des rayons. Cette disposition favorise le parallélisme des rayons et leur positionnement transversal dans le réservoir. Elle peut être également utilisée dans le mode de réalisation des figures 1 et 2. On pourra également utiliser un fond 2 incurvé de façon continue défini par des génératrices transversales horizontales, tel qu'une portion de cylindre.

Le dispositif de sélection en sortie 3 du réservoir comprend un premier couteau 44, animé d'un mouvement de translation alternatif vertical, sous l'action de moyens d'entraînement 8. Le couteau 44 est mobile entre une première position, représentée en traits pleins sur la figure, dans laquelle la tranche supérieure 45 affleure le fond 2 du réservoir 1, et une seconde position, représentée en pointillés, dans laquelle la tranche supérieure 45 atteint le niveau d'une rampe intermédiaire 46 conduisant à un second couteau 47. Le second couteau est animé d'un mouvement de translation alternatif vertical en synchronisme avec le premier couteau. Il est mobile entre une position inférieure, représentée en traits pleins sur la figure, dans laquelle sa tranche supérieure affleure la rampe intermédiaire 46, et une position supérieure dans laquelle sa tranche supérieure atteint le niveau d'une rampe supérieure 48. La rampe supérieure 48 se raccorde à la rampe de guidage 9 par un saut. On pourra toutefois prévoir des rampes 9 et 48 sur le même niveau. Les essais ont montré que le premier couteau 44 doit avoir un débattement vertical important, par exemple de l'ordre de la demi longueur de tige d'un rayon, tandis que le second couteau peut avoir un débattement plus faible. L'épaisseur du premier couteau est choisie de façon à permettre l'insertion de un à trois rayons sur sa tranche supérieure. Cette épaisseur est sensiblement la même que la somme des épaisseurs du second couteau et de la rampe intermédiaire 46. Le second couteau a une épaisseur réduite, de façon à ne prendre qu'un seul rayon à la fois.

Le tambour rotatif 10, entraîné en rotation autour de l'axe transversal 35 par un moteur d'entraînement non représenté sur la figure, comporte une surface extérieure sensiblement cylindrique découpée par des rainures périphériques longitudinales 11, parallèles à l'axe 35, de section suffisante pour admettre la tige d'un rayon. Des aimants 49 sont disposés dans le fond des rainures 11, qui favorisent l'entraînement d'un seul rayon à la fois et plaquent la tige dans le fond de rainure tout au long de son transport par le tambour. Un racleur 50 est disposé au début de la partie supérieure du tambour, comme le représente la figure, au voisinage de sa surface extérieure.

Pour décoller les rayons et les éjecter sur la rampe d'évacuation 22, on ménage sur le tambour des gorges périphériques circulaires 51, plus profondes que les rainures 11, et dans lesquelles viennent se loger les extrémités supérieures 52 en forme de peigne de la rampe d'évacuation 22.

Dans ce mode de réalisation, la rampe d'évacuation 22 est simplifiée, et conduit selon un trajet court les rayons dans une goulotte 34 large. L'inclinaison de la tête de rayon par rapport à la tige n'a pas d'importance dans ce dispositif.

L'entraînement du second couteau 47 peut être assuré par le premier couteau 44. A cet effet le premier couteau est solidaire d'une tige 53 venant porter contre la tranche inférieure du second couteau et le soulever pendant la fin de course du premier couteau. Une

0071856

- 9 -

butée 54 limite la course du second couteau vers le bas. Les essais ont montré qu'il convient de limiter autant que possible la hauteur de la rampe 22 pour éviter les rebonds de rayons et diminuer leur temps de chute.

Selon un mode de réalisation particulier, qui augmente la certitude de présence d'un rayon pour son éjection rapide sur la rampe 22, on dispose un premier détecteur 55 au niveau de la rampe de guidage 9 pour commander l'arrêt des couteaux lorsqu'un rayon au moins est présent sur cette rampe. Un second détecteur 56 est disposé en aval de la rampe d'évacuation 22, par exemple au niveau de la goulotte 34, et commande l'arrêt du tambour lorsqu'un rayon est présent dans la goulotte.

Dans le cas d'une utilisation en relation avec une machine à rayonner comportant un chariot pousseur pour éjecter le rayon de la goulotte 34, il pourra être nécessaire de prévoir un troisième détecteur pour détecter que le chariot est en bonne position et permettre l'introduction d'un nouveau rayon dans la goulotte. Ce troisième détecteur commande la remise en rotation du tambour.

La présente invention n'est pas limitée aux modes de réalisation qui ont été explicitement décrits, mais elle inclut les diverses variantes et généralisations contenues dans le domaine des revendications ci-après.

REVENDICATIONS

1 - Distributeur de pièces telles que des rayons de roue à rayons, comprenant un réservoir (1) à rayons, un dispositif de sélection à couteau (6) formant extrémité de sortie du réservoir pour sélectionner les rayons et les disposer sur une rampe de guidage (9) descendante, caractérisé en ce qu'il comprend un tambour rotatif (10), entraîné en rotation par des moyens d'entraînement selon un axe (35) transversal par rapport à la direction de propagation des rayons, muni de rainures périphériques (11) parallèles à l'axe de rotation (35) et de section supérieure à la section des tiges de rayon, le tambour étant disposé en aval de la rampe de guidage (9) pour permettre l'introduction des rayons dans les rainures, et associé à des moyens de butées fixes empêchant l'introduction de deux rayons simultanés dans une rainure, une rampe d'évacuation (22) étant disposée de l'autre côté du tambour pour recueillir et guider les rayons après leur passage sur le tambour, la rotation du tambour assurant le transport des rayons de la première (9) à la seconde (22) rampe.

2 - Distributeur selon la revendication 1, caractérisé en ce que les moyens de butées fixes comprennent un racleur fixe disposé à proximité de la surface supérieure du tambour.

3 - Distributeur selon l'une des revendications 1 ou 2, caractérisé en ce qu'il comprend en outre des aimants (49) disposés dans le fond des rainures (11), et un peigne (52) formant l'extrémité supérieure de la rampe d'évacuation (22) dont les dents s'engagent dans des gorges circulaires périphériques (51) du tambour.

4 - Distributeur selon l'une quelconque des revendications 1 à 3, caractérisé en ce que le dispositif de sélection à couteau comprend deux couteaux consécutifs animés de mouvements de translation alternatifs verticaux, un premier couteau (45) à grand débattement dont la tranche supérieure se déplace entre une position inférieure au niveau du fond de réservoir et une position supérieure au niveau d'une rampe intermédiaire (46) séparant les couteaux, un second couteau à plus faible débattement dont la tranche supérieure se déplace entre une position inférieure au niveau de la rampe intermédiaire (46) et une position supérieure au niveau d'une rampe supérieure (48), la rampe supérieure étant à un niveau plus élevé et adjacente à la rampe de guidage (9).

5 - Distributeur selon l'une quelconque des revendications 1 à 4, caractérisé en ce que le fond du réservoir (2) est en deux parties planes formant dièdre rentrant, raccordées selon une ligne transversale par rapport à la direction de progression des rayons.

6 - Distributeur selon l'une quelconque des revendications 1 à 5, caractérisé en ce que la rampe de guidage (22) comprend deux surfaces inclinées (24, 25) et sensiblement parallèles, disposées l'une en face de l'autre à une distance prédéterminée pour permettre le glissement d'un rayon entre elles, la première surface (24) ou surface supérieure étant glissante, la seconde surface (25) ou surface inférieure étant en une matière adhérente, de sorte que la seconde surface produit sur le rayon un couple de rotation lors de son glissement et que la première surface provoque le blocage de la tête (27) et son maintien au-dessus de la tige (32).

7 - Distributeur selon la revendication 6, caractérisé en ce que la première surface (24) a une largeur au moins égale à la longueur du rayon, de sorte que la tête de rayon (27) vienne en appui glissant contre elle, et en ce que la seconde surface (25) a une largeur inférieure pour libérer la tête de rayon, la distance entre les deux surfaces étant supérieure au diamètre de la tige (32) de rayon et inférieure à la demi somme du diamètre de la tige (32) et du diamètre de la tête (27) de rayon.

8 - Distributeur selon l'une des revendications 6 ou 7, caractérisé en ce que la première surface (24) est en métal glissant, et en ce que la seconde surface (25) comprend des bandes métalliques (30, 31) inclinées recouvertes d'une couche (33, 34) de matière telle que le caoutchouc.

9 - Distributeur selon l'une quelconque des revendications 1 à 8, caractérisé en ce qu'il comprend en outre un détecteur (23) pour détecter la présence d'un rayon dans la zone supérieure du cylindre (10) au voisinage de l'extrémité (20) du capot (19), et commander l'arrêt du tambour et du couteau jusqu'à réception d'un ordre d'éjection de rayon dans le dispositif de guidage (22), de sorte que le dispositif pour sélectionner les rayons fonctionne jusqu'à présentation d'un rayon en regard du détecteur.

10 - Distributeur selon l'une quelconque des revendications 1 à 8, caractérisé en ce qu'il comprend un premier détecteur (55) disposé au niveau de la rampe de guidage (9) pour commander l'arrêt des couteaux lorsqu'un rayon est présent sur la rampe, et un second détecteur (56) disposé en aval de la rampe d'évacuation (22) pour commander l'arrêt du tambour (10) lorsqu'un rayon est présent dans le dispositif d'utilisation (34) .

fig. 1

fig. 2

fig. 3

fig. 4

Office européen
des brevets

**RAPPORT DE RECHERCHE EUROPEENNE**

0071856

Numéro de la demande

EP  82 10 6717

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| | --- | | B 23 P   19/00 // |
| D,A | US-A-3 080 092   (ZDANIS) <br> *En entier* | 1 | B 60 B   31/00 |
| | --- | | |
| D,A | US-A-2 823 830   (KREIDLER) | | |
| | --- | | |
| A | US-A-2 959 270   (HEATON) | | |
| | --- | | |
| A | US-A-2 677 452   (MALLOW) | | |
| | --- | | |
| A | DE-A-2 027 788   (AKISHIMA) | | |
| | --- | | **DOMAINES TECHNIQUES RECHERCHES (Int. Cl. 3)** |
| A | US-A-3 758 931   (PATTERSON) | | |
| | --- | | B 65 G |
| A | US-A-4 062 095   (STORZ) | | B 60 B <br> B 23 P |
| | ----- | | |

Le présent rapport de recherche a été établi pour toutes les revendications

| Lieu de la recherche | Date d'achèvement de la recherche | Examinateur |
|---|---|---|
| LA HAYE | 02-12-1982 | BERGHMANS H.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

      : membre de la même famille, document correspondant

OEB Form 1503. 03.82